# EUROPEAN PATENT SPECIFICATION

(11) **EP 1 851 088 B1**
(45) Date of publication and mention of the grant of the patent: **06.04.2011**
(21) Application number: 06710351.5
(22) Date of filing: 10.02.2006
(51) Int. Cl.: B60N 2/70, A47C 7/14, B62J 1/26, B29C 44/32, B29C 70/68, B29C 70/72

(54) **ERGONOMIC SUPPORT STRUCTURE FOR HUMAN BODY PARTS AND METHOD OF MANUFACTURING SAME**
ERGONOMISCHE STÜTZSTRUKTUR FÜR TEILE DES MENSCHLICHEN KÖRPERS UND HERSTELLUNGSVERFAHREN DAFÜR
STRUCTURE DE SOUTIEN ERGONOMIQUE POUR DES PARTIES DU CORPS HUMAIN ET SON PROCEDE DE FABRICATION

(30) Priority: 10.02.2005 IT VI20050040
(43) Date of publication of application: 07.11.2007
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2006/000258
(87) International publication number: WO 2006/085202

(56) References cited:
- EP-A- 0 903 321
- WO-A-2004/089682
- US-A- 5 976 098
- US-A1- 2003 025 363
- US-A1- 2004 098 806
- PATENT ABSTRACTS OF JAPAN vol. 1996, no. 12, 26 December 1996 (1996-12-26) & JP 08 197651 A (YAMAHA MOTOR CO LTD), 6 August 1996 (1996-08-06)

## Description

### Field of the invention

This invention finds application in the field of mechanical structures made of special materials, and particularly relates to an ergonomic support structure.

Furthermore, the invention relates to a process for making the above structure.

### Background of the invention

Cover pads of foam material are known to be used to enhance comfort and ergonomic benefit of support structures, such as bicycle saddles, car seats or the like.

Nevertheless, this solution is unacceptably uncomfortable, inconvenient, and aesthetically prejudicial for the structure.

In an attempt to obviate the above drawbacks, gel inserts are being increasingly used at the areas subjected to the highest pressure by users, to provide comfort where this is most needed. Gel is preferable as compared with foam, due to its higher viscoelasticity and better ergonomic properties.

W02004-089682 discloses an ergonomic cushion for motor vehicle seats, having gel inserts at the ischial regions.

One drawback of this prior art structure is that, although it is undoubtedly comfortable and resilient, the fabric sheath that encapsulates the gel tends to be easily cut and ruptured, with gel tending to leak therefrom. Furthermore, the gel insert, which would be pleasant to the sight, is covered thereby.

An additional general problem is that the cushion Is separate from the seat, and therefore it is uncomfortable and makes the structure bulkier.

Other technically equivalent arrangements are known from US-2004-098806, US-A-4197342, US-A-6009578.

US-B-6454352 discloses a car seat with encapsulated gel pads, capable of deformation when in contact with moving parts of a user.

VHhile this solution is convenient and not exposed to undesired damaging, it has the drawback of incorporating a pad, which makes the structure bulkier and unpleasant to the view.

EP-B1-0903321, on which is based the preamble of claim 1, discloses an ergonomic support structure having one viscoelastic insert placed over a first layer of a predetermined mechanical strength.

US-2003/0025363 discloses a ventilated bicycle saddle wherein one viscoelastic insert is anchored to a metal support frame by means of a second film of an adhesive polymer material.

However, none of the above prior art documents disclose a viscoelastic insert that is placed directly over the first layer of the support. Moreover all of them show support structure including a pad or similar filler layer that increase the weight and bulkiness of the structure.

### Summary of the Invention

The object of this invention is to overcome the above drawbacks, by providing a support structure that is highly efficient and relatively cost-effective.

A particular object is to provide a support structure having a light weight and a high strength.

A further object is to provide a support structure that can be customized, i.e. adapted to the anthropometric structure of any user whatever.

Another object of the invention is to provide a support structure that is pleasant to the sight.

Yet another object of the invention is to provide a highly practical and cost-effective process for making the structure of the invention.

These objects, as well as other objects that will be more apparent hereafter, are fulfilled by an ergonomic support structure according to claim 1.

Thanks to this particular configuration, the structure of the invention has a very light weight and enhanced sturdiness, and allows to avoid the use of pads, that were used as comfort elements in prior art structures. This allows to make structures that are both comfortable and of a very light weight.

Furthermore, the structure of the invention is highly comfortable, particularly suitable for the fabrication of bicycle saddles, car seats, chairs, wrist supports or the like.

Advantageously, this at least one insert may be placed over said at least one first layer to define a free contact surface for the user suitable of controlled deformation.

Thanks to this feature, the structure of the invention meets the needs of various users, regardless of specific anthropometric structures of the parts of human bodies in contact with the structure. The natural ergonomic properties of the viscoelastic material allow the structure to be easily and comfortable adapted to anyone.

Also, the lack of a pad provides an assembly that is highly pleasing to the sight, a non-negligible advantage in the field of sports and leisure, which is highly influenced by fashion and aesthetics.

Suitably, the structure of the invention may have a thermoplastic cover layer, placed over said at least one insert and the top surface of said at least one first layer.

Thanks to this feature, the structure is highly pleasant to the touch and safe, as it protects users from any rupture of the first layer which might otherwise have dangerous structural discontinuities and injure the users.

According to another aspect of the invention there is provided a process for making an ergonomic support structure like the one disclosed above, according to claim 8.

### Brief description of the drawings

Further features and advantages of the invention will be more apparent from the detailed description of a preferred, non-exclusive embodiment of a structure according to the invention, which is described by way of non-limiting example with reference to the annexed drawings, in which:
FIG. 1 is an axonometric view of a support structure according to the invention;
FIG. 2 is an axonometric view of a detail of FIG. 1;
FIG. 3 is a sectioned view of the structure of the invention, as taken along a plane *III-III*;
FIG. 4 is another sectioned view of the structure of the invention, as taken along a plane *IV IV*;
Fig. 5 shows a flowchart of a process for making the support structure of the invention.

### Detailed description of a preferred embodiment

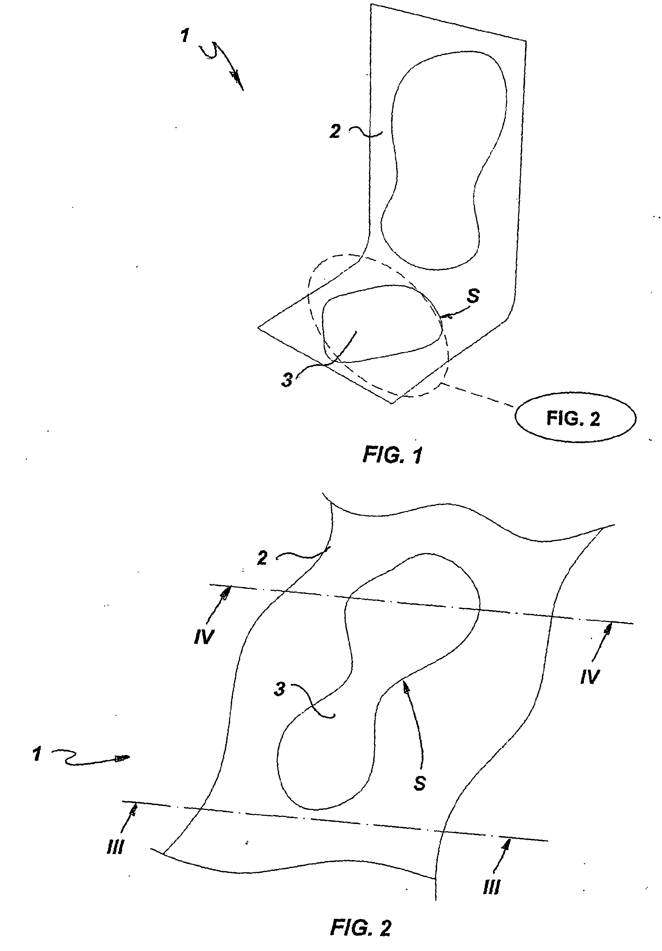

Referring to the above figures, the structure of the invention, generally designated by numeral 1, may be, for instance, a part of a chair, a bicycle saddle, a wrist support or a car seat, as shown in FIG. 1.

Typically, the structure 1 comprises a main body 2, with the viscoelastic insert 3, preferably made of polyurethane gel, permanently anchored thereto. This defines a free contact surface S for the user and, thanks to its natural ergonomic properties, it may be freely placed at the contact areas between the user and the structure 1. The main body 2 may include, for instance, a first layer 4 associated to a second layer 5.

Particularly, the member 4 has a low density and a high mechanical strength, i.e. a high resistance to compressive and/or tensile and/or bending and/or torsional and/or shearing stresses. Furthermore, as is known, the second layer 5 is essentially composed of one or more thermoplastic or thermosetting resins, possibly reinforced.

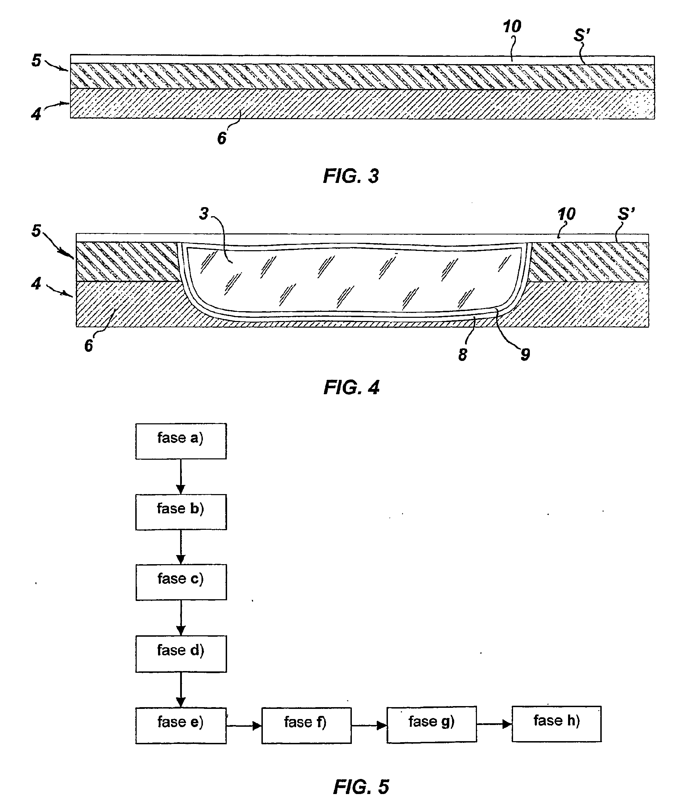

According to the invention, the fist layer 4 may include a metal sheet 6, e.g. made of titanium, aluminum, stainless steel, magnesium or the like, associated to the layer 5, and wholly or partly covered thereby, as shown in FIG. 3.

In accordance with this configuration of the invention, the inserts 3 may be anchored by an adhesive polymer film 8, which is used to bind the insert 3 and the sheet 6, as shown in FIG. 4.

In this case, to allow handling of the insert 3, the latter may be covered by a protective layer 9 of a material adapted to oppose its high inherent adhesiveness, such as a polyurethane paint.

Advantageously, the structure 1 may have a thermoplastic cover layer 10, having protection functions.

Suitably, the layer 10 may be transparent, so that the aesthetically pleasing connection between the material of the body 2 and the gel of the insert 3 is visible. A process for making the structure 1 includes the following steps.

In the first step a) a mold is provided, having an inner cavity of a predetermined shape, which corresponds to the external configuration of the main body 2 of the support structure.

Then, in step b), the mold is opened and the first layer 4 is laid thereon, and in step d) one or more inserts 3 are placed thereon after a step c) in which the adhesive 8 is applied on the member 4.

In step e) the second layer of polymer resin 5 is laid, to provide a monolithic structure. Conveniently, the cover layer 10 may be placed in the mold to protect the assembly, thereby providing the above mentioned advantages.

Then, in step f), the mold is hermetically sealed and heated to a predetermined operating temperature, which may be in a range of 20°C to 300°C, and will preferably be of about 120°C. Such temperature will be typically close to the glass transition temperature of the resin layer 5. In this step, chemical and/or mechanical bonds will be formed to form a monolithic assembly from the body 2 and the inserts 3.

After a step g), in which the mold is cooled to a predetermined final temperature, in a range of 18°C to 50°C, and preferably of about 20°C, the final step h) will follow, during which the mold is opened, and the finished support structure 1 is removed therefrom.

The above disclosure clearly shows that the structure of the invention fulfills the proposed objects and particularly meets the requirement of providing a highly comfortable and light support structure.

By using low density and high strength materials, in combination with the gel of the insert 3, a very comfortable structure is obtained, which is capable of fitting the anthropometric structure of any user whatever, while reducing the overall weight and maintaining sturdiness.

The structure of the invention is susceptible of a number of changes and variants, within the inventive concept disclosed in the appended claims. All the details thereof may be replaced by other technically equivalent parts, and the materials may vary depending on different needs, without departure from the scope of the invention.

While the structure has been described with particular reference to the accompanying figures, the numerals referred to in the disclosure and claims are only used for the sake of a better intelligibility of the invention and shall not be intended to limit the claimed scope in any manner.

## Claims

1. An ergonomic support structure, particularly for supporting parts of the human body, comprising a main body (2) with a viscoelastic insert (3) permanently anchored thereto, wherein said main body (2) has at least one first layer (4) made of a material selected from those having a relatively low density and a relatively high mechanical strength, at least one second layer (5) of polymer resin associated to said at least one first layer (4) for monolithically anchoring said at least one insert (3), said at least one insert (3) being placed over said at least one first layer to define a free contact surface (S) for the user that is suitable of controlled deformation,
**characterized in that**
said at least one first layer (4) is made of a metallic material, said first layer (4) of metallic material being a metal sheet (6), at least one third layer (8) of a polymer material being interposed between said metal sheet (6) and said at least one viscoelastic insert (3), said at least one third layer (8) being directly applied to said metal sheet (6) and having relatively high adhesive properties to anchor said metal sheet (6) to said at least one viscoelastic insert (3).

2. A structure as claimed in claim 2, **characterized in that** said metal material is selected from titanium, aluminum, stainless steel, magnesium or the like.

3. A structure as claimed in claim 1, **characterized in that** said at least one second layer (5) of polymeric material is made of one or more thermoplastic or thermosetting resins for monolithically anchoring said at least one insert (3).

4. A structure as claimed in claim 1, **characterized in that** it comprises a thermoplastic cover layer (10), placed over said at least one insert (3) and the top surface (S') of said at least one first layer (4).

5. A structure as claimed in claim 4, **characterized in that** said cover layer (10) is of the transparent type.

6. A structure as claimed in claim 1, **characterized in that** said viscoelastic insert (3) is made of a gel material.

7. A structure as claimed in claim 6, **characterized in that** said gel is selected from the group of polyurethane gels.

8. A process for making an ergonomic support structur , particularly for supporting parts of the human body, as claimed in one or more of claims 1 to 7, comprising the steps of:
a) providing a mold having an inner cavity of a predetermined shape which corresponds to the external configuration of a main body (2) of a support structure;
b) opening said mold and laying thereon at least one first layer (4) made of a metallic material having a relatively low density and a relatively high resistance to compressive and/or shearing stresses;
c) applying at least one layer (8) of a polymeric material directly over said metal sheet (6);
d) placing at least one viscoelastic insert (3) in said mold
e) placing at least one second layer (5) polymer resin;
f) hermetically sealing said mold and heating it to a predetermined operating temperature;
g) cooling said mold to a predetermined fmal temperature;
h) opening said mold and removing the finished support structure therefrom;
wherein said first layer (4) of metallic material is a metal sheet and said at least one third layer (8) of a polymeric material is selected among those having relatively high adhesive properties to anchor said metal sheet (6) to said at least one viscoelastic insert (3).

9. A process as claimed in claim 8, **characterized in that** comprises a step during which a thermoplastic cover layer (10) is placed over said at least one insert (3) and the top surface (S') of said at least one first layer (4).

10. A process as claimed in claim 8, **characterized in that** said predetermined final temperature is of 18°C to 50°C and is preferably of about 20°C.

11. A process as claimed in claim 8, **characterized in that** said predetermined operating temperature is of 20°C to 300°C and is preferably of about 120°C.

## Patentansprüche

1. Ergonomische Tragkonstruktion, insbesondere zum Tragen von Teilen des menschlichen Körpers, umfassend einen Hauptkörper (2) mit einer dauerhaft daran befestigten viskoelastischen Einlage (3), wobei dieser Hauptkörper (2) mindestens eine erste Schicht (4) aus einem Material aufweist, das aus denen mit einer relativ geringen Dichte und einer relativ hohen mechanischen Festigkeit ausgewählt ist, wobei mindestens eine zweite Schicht (5) aus Polymerharz mit dieser mindestens einen ersten Schicht (4) verbunden ist, um die mindestens eine Einlage (3) monolithisch zu befestigen, wobei diese mindestens eine Einlage (3) über der mindestens einen ersten Schicht angeordnet ist, um eine freie Kontaktfläche (S) für den Benutzer zu definieren, die sich zur kontrollierten Verformung eignet, **dadurch gekennzeichnet, dass**
diese mindestens eine erste Schicht (4) aus einem metallischen Material besteht, wobei diese erste Schicht (4) aus metallischem Material ein Metallblech (6) ist, wobei mindestens eine dritte Schicht (8) aus einem Polymermaterial zwischen das Metallblech (6) und die mindestens eine viskoelastische Einlage (3) eingefügt ist, wobei diese mindestens eine dritte Schicht (8) direkt am Metallblech (6) angebracht ist und relativ hohe Hafteigenschaften aufweist, um das Metallblech (6) an der mindestens einen viskoelastischen Einlage (3) zu befestigen.

2. Konstruktion nach Anspruch 2, **dadurch gekennzeichnet, dass** das metallische Material aus Titan, Aluminium, Edelstahl, Magnesium oder dergleichen ausgewählt ist.

3. Konstruktion nach Anspruch 1, **dadurch gekennzeichnet, dass** die mindestens eine zweite Schicht (5) aus Polymermaterial aus einem oder mehreren thermoplastischen oder duroplastischen Harzen zum monolithischen Befestigen der mindestens einen Einlage (3) besteht.

4. Konstruktion nach Anspruch 1, **dadurch gekennzeichnet, dass** sie eine thermoplastische Deckschicht (10) umfasst, die sich über der mindestens einen Einlage (3) und der oberen Oberfläche (S') der mindestens einen ersten Schicht (4) befindet.

5. Konstruktion nach Anspruch 4, **dadurch gekennzeichnet, dass** diese Deckschicht (10) vom transparenten Typ ist.

6. Konstruktion nach Anspruch 1, **dadurch gekennzeichnet, dass** die viskoelastische Einlage (3) aus einem Gelmaterial besteht.

7. Konstruktion nach Anspruch 6, **dadurch gekennzeichnet, dass** das Gel aus der Gruppe der Polyurethan-Gele ausgewählt ist.

8. Verfahren zur Herstellung einer ergonomischen Tragkonstruktion, insbesondere zum Tragen von Teilen des menschlichen Körpers, nach einem oder mehreren der Ansprüche 1 bis 7, das die folgenden Schritte umfasst:
a) Bereitstellen einer Form mit einem inneren Hohlraum mit einer vorbestimmten Form, die der äußeren Gestalt eines Hauptkörpers (2) einer Tragkonstruktion entspricht;
b) Öffnen der Form und Darauflegen mindestens einer ersten Schicht (4) aus einem metallischen Material mit einer relativ geringen Dichte und einer relativ hohen Festigkeit gegenüber Druck- und/oder Scherbeanspruchungen;
c) Anbringen mindestens einer Schicht (8) aus einem Polymermaterial direkt über dem Metallblech (6);
d) Anordnen mindestens einer viskoelastischen Einlage (3) in der Form;
e) Anordnen mindestens einer zweiten Schicht (5) Polymerharz;
f) hermetisches Verschließen der Form und Erhitzen derselben auf eine vorbestimmte Betriebstemperatur;
g) Abkühlen der Form auf eine vorbestimmte Endtemperatur;
h) Öffnen der Form und Herausnehmen der fertigen Tragkonstruktion daraus;
wobei die erste Schicht (4) aus metallischem Material ein Metallblech ist und die mindestens eine dritte Schicht (8) aus einem Polymermaterial aus denen mit relativ hohen Hafteigenschaften ausgewählt ist, um das Metallblech (6) an der mindestens einen viskoelastischen Einlage (3) zu befestigen.

9. **Verfahren nach Anspruch 8, dadurch gekennzeichnet, dass** es einen Schritt umfasst, bei dem eine thermoplastische Deckschicht (10) über der mindestens einen Einlage (3) und der oberen Oberfläche (S') der mindestens einen ersten Schicht (4) angeordnet wird.

10. Verfahren nach Anspruch 8, **dadurch gekennzeichnet, dass** die vorbestimmte Endtemperatur 18°C bis 50°C und vorzugsweise ungefähr 20°C beträgt.

11. Verfahren nach Anspruch 8, **dadurch gekennzeichnet, dass** die vorbestimmte Betriebstemperatur 20°C bis 300°C und vorzugsweise ungefähr 120°C beträgt.

## Revendications

1. Structure de support ergonomique, en particulier pour supporter des parties du corps humain, comprenant un corps principal (2) avec un insert viscoélastique (3) fixé de manière permanente à celui-ci, dans lequel ledit corps principal (2) a au moins une première couche (4) réalisée avec un matériau sélectionné parmi ceux ayant une densité relativement faible et une résistance mécanique relativement élevée, au moins une deuxième couche (5) de résine polymère associée à ladite au moins une première couche (4) pour fixer de manière monolithique ledit au moins un insert (3), ledit au moins un insert (3) étant placé sur ladite au moins une première couche pour définir une surface de contact libre (S) pour l'utilisateur qui est adaptée pour une déformation contrôlée,
**caractérisée en ce que**
ladite au moins une première couche (4) est constituée d'un matériau métallique, ladite première couche (4) de matériau métallique étant une feuille métallique (6), au moins une troisième couche (8) d'un matériau polymère étant interposée entre ladite feuille métallique (6) et ledit au moins un insert viscoélastique (3), ladite au moins une troisième couche (8) étant appliquée directement sur ladite feuille métallique (6) et ayant des propriétés adhésives relativement élevées pour fixer ladite feuille métallique (6) audit au moins un insert viscoélastique (3).

2. Structure selon la revendication 2, **caractérisée en ce que** ledit matériau métallique est sélectionné parmi le titane, l'aluminium, l'acier inoxydable, le magnésium ou similaire.

3. Structure selon la revendication 1, **caractérisée en ce que** ladite au moins une deuxième couche (5) en matériau polymère est constituée d'une ou plusieurs résines thermoplastiques ou thermodurcissables pour fixer de manière monolithique ledit au moins un insert (3).

4. Structure selon la revendication 1, **caractérisée en ce qu'**elle comprend une couche de couverture thermoplastique (10), placée sur ledit au moins un insert (3) et la surface supérieure (S') de ladite au moins une première couche (4).

5. Structure selon la revendication 4, **caractérisée en ce que** ladite couche de couverture (10) est du type transparent.

6. Structure selon la revendication 1, **caractérisée en ce que** ledit insert viscoélastique (3) est constitué de matériau de gel.

7. Structure selon la revendication 6, **caractérisée en ce que** ledit gel est sélectionné dans le groupe des gels polyuréthannes.

8. Procédé pour réaliser une structure de support ergonomique, en particulier pour supporter des parties du corps humain, selon une ou plusieurs des revendications 1 à 7, comprenant les étapes consistant à :
a) prédisposer un moule comportant une cavité intérieure d'une forme prédéterminée qui correspond à la configuration externe d'un corps principal (2) d'une structure de support ;
b) ouvrir ledit moule et déposer sur celui-ci au moins une première couche (4) constituée d'un matériau métallique ayant une densité relativement faible et une résistance relativement élevée aux contraintes de compression et/ou de cisaillement ;
c) appliquer au moins une couche (8) d'un matériau polymère directement sur ladite feuille métallique (6) ;
d) placer au moins un insert viscoélastique (3) dans ledit moule ;
e) placer au moins une deuxième couche (5) de résine polymère ;
f) sceller hermétiquement ledit moule et le chauffer à une température d'exercice prédéterminée ;
g) refroidir ledit moule à une température finale prédéterminée ;
h) ouvrir ledit moule et retirer la structure de support finie de celui-ci ;
dans lequel ladite première couche (4) de matériau métallique est une feuille métallique et ladite au moins une troisième couche (8) d'un matériau polymère est sélectionné parmi ceux présentant des propriétés adhésives relativement élevées pour fixer ladite feuille métallique (6) audit au moins un insert viscoélastique (3)

9. Procédé selon la revendication 8, **caractérisé en ce qu'**il comprend une étape durant laquelle une couche de couverture thermoplastique (10) est placée sur ledit au moins un insert (3) et la surface supérieure (S') de ladite au moins une première couche (4).

10. Procédé selon la revendication 8, **caractérisé en ce que** ladite température finale prédéterminée est de 18°C à 50°C et est de préférence d'environ 20°C.

11. Procédé selon la revendication 8, **caractérisé en ce que** ladite température d'exercice prédéterminée est de 20°C à 300°C et est de préférence d'environ 120°C.
